# EUROPEAN PATENT SPECIFICATION

(11) **EP 2 395 847 B1**
(45) Date of publication and mention of the grant of the patent: **17.04.2013**
(21) Application number: 10710998.5
(22) Date of filing: 12.02.2010
(51) Int. Cl.: A23C 11/00, A23C 11/04, A23F 5/24, A23L 1/0534

(54) **LOW PROTEIN AND PROTEIN-FREE EXTENDED SHELF LIFE (ESL) AND SHELF-STABLE ASEPTIC LIQUID CREAMERS AND PROCESS OF MAKING THEREOF**
PROTEINFREIE ODER MIT NIEDRIEGEM EIWEISSGEHALT ASEPTISCHE UND STABILE FLÜSSIGE KAFFEEWEISSER, UND HERSTELLUNGSVERFAHREN
SUBSTITUTS DE CREME SANS PROTEINES OU A FAIBLE TENEUR EN PROTEINES AYANT UNE DUREE DE CONSERVATION LONGUE, ET PROCEDE DE FABRICATION

(30) Priority: 12.02.2009 US 152156 P
(43) Date of publication of application: 21.12.2011
(73) Proprietor: Nestec S.A., 1800 Vevey (CH)
(72) Inventor: SHER, Alexander, A., Dublin Ohio 43017 (US); NAPOLITANO, Guillermo, Dublin OH 43017 (US); ERICKSON, Linda, J., Dublin OH 43016 (US); BEESON, Christine, Ann, Marysville OH 43040 (US); OCTAVIA, Winnie, Delaware Ohio 43015 (US); GUTIERREZ, Antonio, J., Dublin Ohio 43017 (US)
(74) Representative: Lomholt, Stig Bredsted
(86) International application number: PCT/EP2010/000869
(87) International publication number: WO 2010/091871

(56) References cited:
- WO-A1-2009/068543
- WO-A1-2009/068544
- WO-A2-2007/044782
- US-A- 3 706 572
- US-A- 4 046 926
- US-A- 4 857 341

## Description

### FIELD OF INVENTION

The present invention relates to stabilizing systems and compositions for non-dairy, extended shelf life (ESL) and shelf-stable aseptically packaged liquid creamers, and to the processes for making them.

### BACKGROUND OF THE INVENTION

Creamers, also known as whiteners, are widely used as whitening agents with hot and cold beverages such as coffee, cocoa, and tea. Creamers can also be used as replacement for milk or dairy cream with powders or particulates such cereals. Creamers are available in different flavors to provide desirable mouth-feel, body, and smooth texture.

Creamers are available in both liquid and powder forms. However, creamers in powder forms do not provide an impression of traditional dairy creamers. Moreover, powder creamers may be difficult to dissolve when added to beverages such as coffee, which may result in non homogeneous beverages.

Although dairy whiteners usually provide good mouth-feel, they are unacceptable for people with dairy intolerance. Also, liquid dairy creamers are inconvenient in use due to their short storage capabilities and their tendency to spoil rapidly even under refrigeration conditions. Therefore, the market of non-dairy liquid creamers is rapidly growing, with the United States being the market leader for this type of product.

To provide a superior taste to hot or cold beverages such as coffee and tea, the non-dairy liquid creamer should have a good whitening capacity, dissolve rapidly and remain stable without feathering, breaking emulsion, de-oiling, flocculation and sedimentation, which is especially difficult to achieve in a hot, acidic environment.

Several patents, such as European patent application No. 0 457 002 and US patent No. 3,935,325 describe coffee creamers that are made of water, vegetable oil, protein or protein hydrolysate, carbohydrates, buffering salt, emulsifiers and other ingredients. However, these coffee creamers are not shelf-stable.

A number of patents discloses creamers containing whitening agents such as titanium dioxide. For example, US patent No. 4,784,865 describes a dairy coffee creamer comprising low fat milk, non fat dry milk, emulsifiers such as mono- and diglycerides, and TiO₂ as a whitening agent. This product is pasteurized and remains stable under refrigerated and non-refrigerated conditions for at least 90 and 30 days, respectively. Due to the absence of stabilizing systems, severe sedimentation of TiO₂ during the storage is expected. Furthermore, an extended-shelf-life (at least 6 months) cannot be achieved because this product is not aseptically processed.

US patent No. 5,571,334 describes another example of a liquid creamer containing a whitening agent, which comprises an opacifier such as TiO₂ incorporated in a starch matrix. Since the disclosed creamer is not aseptically processed, an extended-shelf-life (at least 6 months) cannot be achieved. Moreover, a large amount of sodium caseinate is used to achieve emulsion stability of the creamer.

Shelf-stable creamers have been described in several patents. For example, US patent No. 4,748,028 patent discloses an aseptic liquid creamer and process for preparing the same. The process comprises performing UHT sterilization of a mixture comprising water, vegetable fat, emulsifiers, a milk protein, salt and other ingredients, cooling, homogenizing and further cooling, and filling the resulting liquid in an aseptic container under aseptic conditions. The main disadvantage of this creamer is that it requires a high level of fat and provides insufficient whitening power with reduced fat level. It is only stable against browning under refrigeration conditions (up to 4 months).

PCT application WO 2007/044782 describes a non-dairy, aseptic liquid creamer with an emulsifier level of at least 1% in order to achieve a stable emulsion. The emulsifiers are combined with a milk protein such as calcium caseinate, sodium caseinate, or potassium caseinate in order to achieve stability of the creamer.

In sum, presently existing creamer technology requires the use of proteins, usually at very high levels, to achieve emulsion stability. Proteins are known as strong emulsifiers and milk proteins, such as casein, sodium caseinate and whey proteins, are preferred due to their unique emulsifying properties. However, addition of proteins to ultra-high temperature (UHT) treated liquid creamers may lead to sedimentation due to protein denaturation and lower water solubility of the proteins or their derivatives. Additionally, competition between proteins and low molecular weight emulsifiers may lead to emulsion instability resulting in product creaming.

Another disadvantage in using proteins in ESL or aseptic liquid creamers is clumping during storage. For instance, a "plug" may form overnight when the creamer is stored at refrigerated, room, or elevated temperatures, making pouring difficult and the product unusable. Furthermore, when added to coffee, feathering may result from emulsion instability of the protein in this hot, acidic environment, especially in the presence of Ca²⁺ and /or Mg²⁺ ions.

Finally, with the increasing cost of proteins such as casein, the reduction or elimination of proteins in creamers is desirable. The challenge in creating a low protein or protein-free creamer is to achieve a stable emulsion without phase separation (e.g. creaming, gelation, syneresis) during storage and after reconstitution in beverages, especially in hot and acidic beverages.

As consumers are increasingly health conscious, there is also an increased demand for low-fat and non-fat creamers. Because fat helps achieve emulsion, it is an added challenge to provide a non-dairy liquid creamer that has the desired stability, color, texture, body, and flavor, but low or no fat. Another problem with low-fat or non-fat creamer is its decreased whitening capacity. Although whitening agents such as TiO₂ can be added to compensate the decrease in whitening capacity caused by the fat reduction, challenges remain to solve the problems associated with the addition of TiO₂, i.e., sedimentation, physical instability of emulsion and phase separation during storage.

Thus, there is a need for ESL and aseptic liquid creamers that have low or no protein, with full fat, reduced fat or no fat, but still maintain the desired properties of fresh creamers. Specifically, such low protein or protein-free creamers must have good physico-chemical stability (without creaming and sedimentation) throughout their shelf life, and a pleasant mouth-feel, and without feathering, breaking emulsion, de-oiling, flocculation and sedimentation when added to liquid beverages such as coffee and tea.

### SUMMARY OF THE INVENTION

The invention set forth herein satisfies the unmet needs of the art by providing a non-dairy, low protein or protein-free ESL and aseptic liquid creamer composition containing oil/fats, carbohydrates, titanium dioxide and a stabilizing complex system comprising emulsifier(s), hydrocolloid(s), buffer(s) and chelating agent(s). The aseptic liquid creamer is shelf-stable for at least nine months.

The liquid creamer of the invention has good physico-chemical stability during the storage, and are easily dispersible in hot or cold acidic beverages, such as coffee, tea or cocoa. These compositions provide high whitening capacity and a pleasant mouth-feel with no discernable feathering or fat separation when added to aqueous media of beverages at different pHs, water hardnesses and temperatures.

In one embodiment of the invention, the low protein or protein-free liquid creamer composition comprising: (i) one or more emulsifying components advantageously comprising a combination of at least two low molecular weight emulsifiers; (ii) a hydrocolloid system comprising microcrystalline cellulose (MCC) / carboxymethylcellulose (CMC) / carrageenan; (iii) a chelating system comprising at least one chelating agent of an organic or inorganic acid or organic or inorganic acid salt; (iv) a buffer system comprising at least one buffering agent; and (v) a whitening agent in an amount sufficient to provide additional whitening to an aqueous media to which the creamer is added.

In a preferred embodiment of the invention, the at least one chelating agent is citric acid, amino acids, sodium or potassium salts of amino acids, sodium or potassium hexamethaphosphates, sodium or potassium tri-, tetra- and other polyphosphates, sodium or potassium citrate, EDTA, sodium or potassium salts of EDTA, sodium or potassium tartrate, or a combination thereof, and is present in an amount from about 0.02 to 1.4 wt%, preferably from 0.05 to 1 wt%, and most preferably from 0.1 up to about 0.3 to 0.5 wt%. The wt/wt ratio between the hydrocolloid system and chelating agent(s) may be (0.035 - 100):1; preferably (1-50):1, more preferably (1-10):1, and most preferably (2-5): 1.

In another embodiment, the emulsifying components of the creamer of the invention comprise a combination of a low HLB emulsifier and a medium HLB emulsifier. Preferably, the low HLB emulsifier is selected from the group consisting of monoglycerides, diglycerides, acetylated monoglycerides, sorbitan trioleate, glycerol dioleate, sorbitan tristearate, propyleneglycol monostearate, glycerol monooleate and monostearate, and a combination thereof; and the medium HLB emulsifier is selected from the group consisting of sorbitan monooleate, propylene glycol monolaurate, sorbitan monostearate, calcium stearoyl-2-lactylate, glycerol sorbitan monopalmitate, soy lecithin, diacetylated tartaric acid esters of monoglycerides, and a combination thereof.

Advantageously, the composition has a vegetable oil content of about 0.1% to about 33 % by weight of the composition and a protein content of no more than 3% by weight of the composition.

In an embodiment of the liquid creamer of the invention, the at least one emulsifier component is a medium Hydrophobic / Lipophilic Balance (HLB) emulsifier present in an amount of 0.05% to 1.8% by weight of the composition. Preferably, the medium HLB emulsifier comprises a glyceride compound such as succinylated monoglyceride, succinylated di-glyceride or a combination thereof. Preferably, when a combination is used, the diglycerides are present in an amount of 0.01 % to 25% by weight of the total glycerides in the composition. The fatty acid chain length in the succinylated di-glyceride is from C-4 to C-24.

Preferably the whitening agent is titanium dioxide having a particle size of about 0.1 to about 0.7 microns with a mean particle size of 0.3 microns, and is present in an amount of about 0.1 to about 1 percent by weight of the composition.

In one preferred embodiment of the invention, the at least one buffering agent is a food grade salt of organic or inorganic acid selected from the group consisting of potassium phosphate, dipotassium phosphate, tripotassium phosphate, sodium phosphate, disodium phosphate, trisodium phosphate, sodium tripolyphosphate, potassium tripolyphosphate, tetra sodium pyrophosphate, tetra potassium pyrophosphate, sodium hexametaphosphate, potassium carbonates, sodium carbonates, potassium bicarbonates, sodium bicarbonates, sodium or potassium acetate, sodium or potassium ascorbate, and a combination thereof, or in combination with organic or inorganic acid, and is present at an amount of about 0.05 % to about 2.1 % by weight of the composition, preferably from 0.1 to 0.8 wt%, and most preferably from 0.3 to 0.6 wt%.

The invention further provides for a beverage comprising an aqueous liquid, a beverage-forming component such as coffee, tea, chocolate or a fruit drink, and the creamer of the invention in an amount sufficient to provide a creaming effect to the beverage. The creamer of the invention can also be used as a dairy replacement for consumption with food such as cereals and berries, or for use in cooking as creamers for soups and other applications. The creamer of the invention may further comprise at least one food grade preservative selected from the group consisting of sodium benzoate, potassium benzoate, sorbic acid, sodium sorbate, potassium sorbate, sulfites, and combinations thereof.

The invention further provides for a process of manufacture of the liquid creamer of the invention comprising providing the emulsifying component, the hydrocolloid system, the chelating agent(s), the buffering agent(s), and the whitening agent, in powder or liquid form, or a combination thereof; and dissolving the powder components in water with agitation. The water may be cold, hot, or cold and then heated, or hot and then cooled. In one embodiment, this process further comprises adding a sweetener, in powder form or liquid form, or a combination thereof, into the water with agitation. Additionally, vegetable oil can be added to the water to produce a mixture of all components, followed by subjecting the mixture to a heat treatment selected from the group consisting of ultra-high temperature (UHT) pasteurization or sterilization, retorting and other thermoprocessing procedures, homogenization, cooling, and then either filling in containers under aseptic conditions to produce the liquid creamer.

### BRIEF DESCRIPTION OF THE DRAWING FIGURES

Figs. 1A and B show examples of destabilization caused by the addition of commercially available Fat Free Liquid Coffee-mate (CML) to hot coffee.
Figs. 2A and B show an example of reversing whitened coffee instability (2A) by adding a chelating agent (2B).
Fig. 3 shows the effect of different levels of a chelating agent, sodium citrate, on the stability of coffee whitened with CML.

### DETAILED DESCRIPTION OF THE PREFERRED EMBODIMENTS

The present invention provides for low protein and protein-free ESL and aseptic liquid creamers formed by the interaction of oil, carbohydrates, titanium dioxide and stabilized by a novel complex stabilizing system comprising hydrocolloids, emulsifiers, pH buffers, and chelating agents. The aseptic liquid creamers of the invention are shelf-stable for at least nine months.

The creamer of the invention can be used as a whitener for a liquid or powder beverage such as coffee, tea, cocoa or a fruit drink to produce physically stable homogeneous beverages with good mouth-feel, full body, smooth texture, and a pleasant taste with no off-flavor notes. The creamers can also be used as a dairy replacement that can be consumed directly or with cereals, as cream for berries, creamers for soups and in many other cooking applications. Creamers of the invention can also be used as a part of other products, such as RTD beverages, 2-in-1 or 3-in-1 liquid concentrates, and 2-in-1 or 3-in-1 powder mixtures.

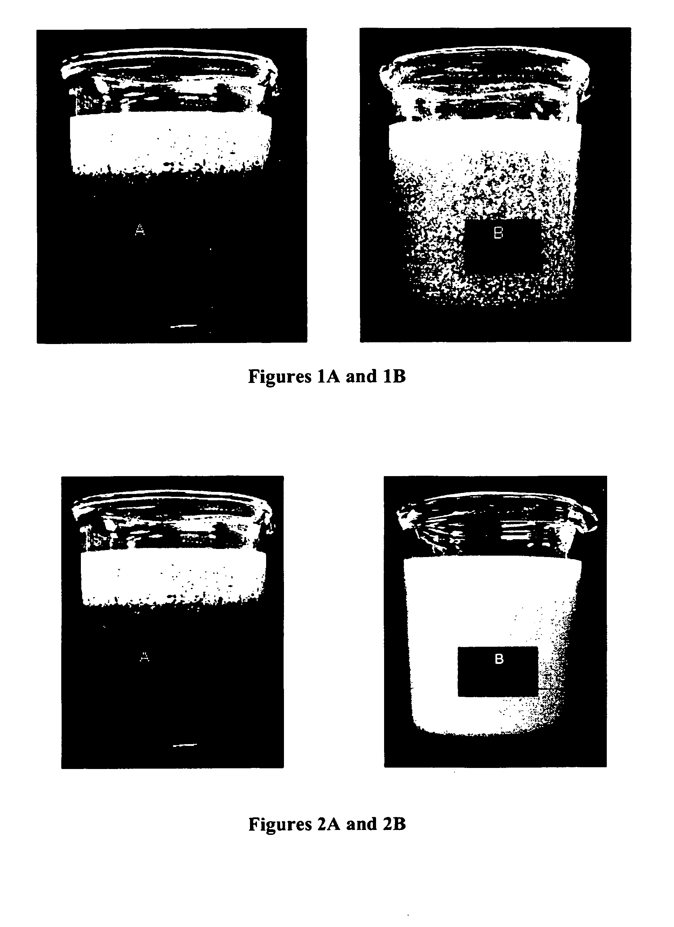

The presence of fat in conventional liquid creamers are crucial for their whitening capacity. To satisfy consumers' increasing desire to reduce the *trans* fatty acid (TFA) levels in creamers, attempts have been made to use whitening agents such as titanium dioxide (TiO₂) to compensate the decrease in whitening power caused by the reduction of fat level in low fat creamers. However, the addition of TiO₂ to replace fat results in other problems such as sedimentation, physical instability of emulsion and phase separation during storage. Moreover, such low fat or no fat liquid creamers may also cause the end-product destabilization when added to hot, acidic beverages such coffee, even if they have survived shelf-stability tests during storage, e.g., 3 weeks at 38°C, 3 months at 30°C and 9 months at RT (20 to 25°C). For example, as shown in Figures 1A and B, the addition of a physically stable Fat Free Liquid Coffee-mate (CML) to hot coffee results in phase separation, emulsion destabilization causing flocculation or de-oiling, and/or TiO₂ sedimentation.

To provide a solution to the end product destabilization problem caused by the addition of CML, several approaches were taken. Surprisingly, it was found that the addition of chelating agents such as citric acid, sodium citrate, sodium tripolyphosphate, sodium hexamethaphosphate and EDTA overcomes the instability. As shown in Figure 2, the instability of the whitened coffee (Fig. 2A) is reversed by the addition of a chelating agent (Fig. 2B). In contrast, adding agents such as NaHCO₃ buffer salt, NaOH and H₃PO₄, to change the pH of the CML did not resolve the CML instability issues when added to whitening coffee.

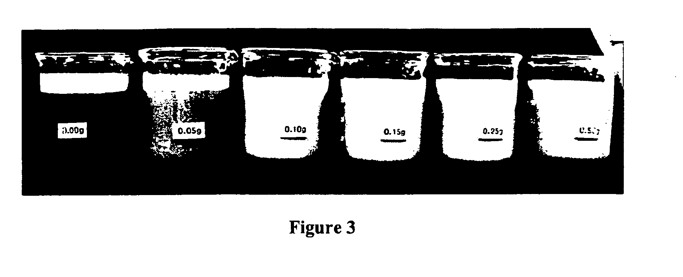

Moreover, it was found that the level of the chelating agents is critical for the physical stability of beverages such as coffee whitened with a liquid creamer. For example, as shown in Figure 3, the effect of a chelating agent, potassium citrate, on the stability of hot coffee depends on its level.

In a preferred embodiment of the invention, the new stabilizing system comprises emulsifier(s), a hydrocolloid system, buffer(s) and chelating agent(s) in specific ratios.

In one embodiment, the chelating agent(s) is present in an amount from about 0.02 to 1.4 wt%, preferably from 0.05 to 1 wt%, and most preferably from 0.1 to 0.3 wt%. The wt/wt ratio between the hydrocolloid system and chelating agent(s) may be (1-50):1, preferably (1-10):1, and most preferably (2-5):1.

Preferably, the chelating agent is citric acid, amino acids, sodium or potassium salts of amino acids, sodium or potassium hexamethaphosphates, sodium or potassium tri-, tetra- and other polyphosphates, sodium or potassium citrate, EDTA, sodium or potassium salts of EDTA, sodium or potassium tartrate, or combinations thereof.

The emulsifying part of the stabilizing system comprises the combination of at least two low molecular weight emulsifiers in specific ratios. It is known that the type of emulsion is controlled by the emulsifier and the emulsifier should be soluble in the continuous phase. Thus, for stable oil in water emulsion, emulsifiers with high Hydrophobic / Lipophilic Balance (HLB) values should provide the best stability. However, it was surprisingly found that the combination of low molecular weight emulsifiers with low and medium HLB provides the best emulsion stability of liquid creamers when the ratio between the emulsifiers with low and medium HLB values is of about 5:1 to about 1:20, preferably of about 3:1 to about 1:10, and most preferably of about 2:1 to about 1:5.

The emulsifiers used are not limited to those of a single acyl or fatty acid component, such as a specific carbon chain length or degree of unsaturation. Preferably, the emulsifiers are monoglycerides and acid esters of monoglycerides, and most preferred, the emulsifiers are combinations of monoglycerides and acid esters of monoglycerides.

The low molecular weight emulsifiers with low HLB values may include but are not limited to monoglycerides, diglycerides, acetylated monoglycerides, sorbitan trioleate, glycerol dioleate, sorbitan tristearate, propyleneglycol monostearate, glycerol monooleate and monostearate, alone or in combination. The low molecular weight emulsifiers with medium HLB values may include but are not limited to sorbitan monooleate, propylene glycol monolaurate, sorbitan monostearate, calcium stearoyl-2-lactylate, glycerol sorbitan monopalmitate, soy lecithin, diacetylated tartaric acid esters of monoglycerides, alone or in combination.

In one embodiment, the emulsifying component(s) are present in an amount from about 0.05 to about 1.8 wt%, preferably from about 0.1 to about 1.2 wt%, and most preferably from about 0.2 to about 0.6 wt% of the creamer composition.

It was also surprisingly found that the above described emulsion stabilizing system is sufficient only in combination with microcrystalline cellulose (MCC) / carboxymethylcellulose (CMC) / carrageenan, buffers and chelating agents. Thus, the low molecular weight emulsifiers alone do not provide physico-chemical stability for the liquid creamer of the invention without the hydrocolloid stabilizing system. Moreover, only the MCC/CMC/carrageenan hydrocolloid stabilizing systems with the wt/wt ratio of (5 - 200):(1 - 50):(1 - 40), preferably (5 - 120):(1 - 15):(1 - 15), and most preferably (10-90):(1 - 10):(1 - 5), provide physico-chemical stability for protein-free liquid creamers. In contrast, combining the preferred emulsifiers with other hydrocolloid systems, such as carrageenan/Xanthan/CMC, carrageenan /Xanthan/MCC, carrageenan /Gellan/MCC, carrageenan/Gellan/CMC, and guar gum/carrageenan/MCC, resulted in severe phase separation of liquid creamers.

In one embodiment, the hydrocolloid system is present in an amount from about 0.05 to about 1.5 wt%, preferably from about 0.15 to about 0.65 wt%, and most preferably from about 0.25 to about 0.55 wt% of the creamer composition.

In one preferred embodiment, the whitening agent in the creamer of the invention is titanium dioxide having a particle size of about 0.1 to about 0.7 microns with a mean particle size around 0.3 microns to take full advantage of light scattering/diffraction. The whitening agent is present in an amount of about 0.1 to about 1 wt% of the composition, preferably about 0.2 to about 0.8 wt% of the composition, and most preferably about 0.3 to about 0.6 wt% of the composition.

The creamer of the invention comprises at least one buffering agent such as potassium phosphate, dipotassium phosphate, tripotassium phosphate, sodium phosphate, disodium phosphate, trisodium phosphate, sodium tripolyphosphate, potassium tripolyphosphate, tetra sodium pyrophosphate, tetra potassium pyrophosphate, sodium hexametaphosphate, potassium carbonates, sodium carbonates, potassium bicarbonates, sodium bicarbonates, or a combination thereof.

In one embodiment, the buffer system is present in an amount from about 0.05 to about 2.1 wt%, preferably from about 0.1 to about 0.8 wt%, and most preferably from about 0.3 to about 0.6 wt% of the creamer composition.

When present, the proteins in the liquid creamer of the invention can include but are not limited to casein, whey, soy, wheat, egg white, their derivatives or a combination thereof. Preferably, the protein source is casein, sodium caseinate, whey protein, soy protein, their isolates or hydrolysates. Most preferably, the protein is casein and sodium caseinate. In another embodiment, the liquid creamer of the composition does not contain protein.

The liquid creamer of the invention may also contain from about 0.1 to 33 wt% of vegetable oil(s). The vegetable oil(s) can comprise partially or wholly hydrogenated oils, alone or in combination. Vegetable oils can include but are not limited to soybean oil, coconut oil, palm oil, cotton seed oil, canola oil, olive oil, sunflower oil, safflower oil.

Optionally, the creamer may contain sweeteners, including but not limited to sucrose, fructose, maltodextrin, high fructose corn syrup, other natural sweeteners, and/or artificial sweeteners, or combination of thereof. The sweeteners may be present in concentration from about 0.1 to 55 wt%, and preferably from 5 to 30 wt%. Further, the creamer of the invention may optionally contain flavor(s) and/or colorant(s), alone or in combination.

According to the present invention, the low protein and protein-free non-dairy aseptic and ESL liquid creamers are homogeneous and have manageable viscosity during the ambient storage for several months without phase separation, gelation and sedimentation during different storage conditions. Sensory evaluation of coffee whitened with the liquid creamer of the invention showed good mouth-feel, full body, smooth texture, and a good taste with no off flavors and undesirable aftertaste. In one embodiment, the composition is in the form of an extended shelf life liquid creamer that is stable for at least six months at refrigeration temperature. Alternatively, the composition may be in the form of an aseptic liquid creamer that is shelf-stable for at least nine months. Advantageously, these creamers provide high whitening capacity and a pleasant mouth-feel with no discernable feathering or fat separation when added to aqueous media of beverages at different pHs, hardnesses and temperatures.

The present invention further provides a process of making the liquid creamer of the invention, which includes providing the emulsifying component, the hydrocolloid system, the chelating agent(s), the buffering agent(s), and the whitening agent, in powder or liquid form, or a combination thereof; and dissolving the components in water under agitation. Other optional components such as sweetener, in powder form, can also be included in this step. Next, a vegetable oil is added to the hot water to produce a mixture of all components. The mixture then undergoes UHT heat treatment, homogenization, cooling, and filling in containers under aseptic conditions. Homogenization can be performed before and/or after heat treatment.

The advantages of the present invention are numerous. First of all, the invention achieves a low protein or protein-free, true non-dairy creamer, with limited use or no use of casein or its derivatives but having high whitening capacity, pleasant mouth-feel and a good flavor without off-notes when added to beverages such as coffee. Additionally, ESL and aseptic liquid creamers of the invention achieve superior physico-chemical stability (a shelf life of at least nine months), with no phase separation such as creaming, gelation, syneresis, or sedimentation, during storage at refrigeration (∼ 4°C) or at room (20°C, 25°C) and elevated temperatures (e.g. 30°C, 38°C). Moreover, creamers of the invention do not oxidize or discolor for at least nine months at refrigeration and room temperatures, and thus provides high whitening capacity even without fat. Furthermore, creamers of the invention are easily dispersible in beverages such as coffee and tea, and are stable even in hot, acidic and high Ca²⁺ and Mg²⁺ environments, without de-oiling, flocculation, feathering and/or sedimentation. Importantly, the reduction or even elimination of the need for milk proteins such as casein provides a significant cost reduction. Additionally, creamers of the invention includes whitening agents such as titanium dioxide (TiO₂), which is maintained in full suspension throughout the liquid creamer shelf-life under all temperature conditions.

### EXAMPLES

The invention is further defined by reference to the following illustrative, nonlimiting examples.

### Example 1

500 g of sucrose was mixed together with 20 g of kappa-carrageenan, 40 g of iota- carrageenan, and with 200 g of 10:1 MCC/CMC blend. The dry blend was added into 60 kg of about 75 °C hot water (65-70°C) under high agitation. Further, 300 g of disodium phosphate and 100 g of sodium tripolyphosphate were added to the tank under continuous agitation.

1 kg of sucrose, 500 g of titanium dioxide, 50 g of sodium caseinate, 5 g of colorant, and 500 g of flavor were blended together. The dry blend was added to the tank of hot water with above stabilizers under agitation. After 5-10 minutes of mixing, 120 g of Dimodan® and 300 g of Panodan® were added under continuous agitation. 4 kg of vegetable oil was added under high agitation, followed by 25 kg of sucrose. The liquid was then UHT treated for 5 sec at 143°C, homogenized at 180/40 bar, cooled and the coffee whitener was aseptically filled into jars, jugs or pouches.

The final composition of the liquid coffee whitener is:

| | |
|---|---|
| - emulsifying component | 0.51 % by weight |
| - hydrocolloid system | 0.28 % by weight |
| - chelating system | 0.11 % by weight |
| - buffer system | 0.32 % by weight |
| - sucrose | 28.61 % by weight |
| - vegetable oil | 4.32 % by weight |
| - titanium dioxide | 0.54 % by weight |
| - water | 64.77 % by weight |
| - other components | 0.55 % by weight |

The product was stored during nine months at room temperature. No creaming, phase separation, gelation, sedimentation and practically no viscosity changes were found during the storage. Further, the addition of this physically stable whitener to hot coffee did not cause phase separation, emulsion destabilization feathering, flocculation or de-oiling, and/or TiO₂ sedimentation in the whitened coffee.

Mouth-feel of coffee having the added coffee whitener was judged by six non-trained panelists, all of which found the product having good mouth-feel without a waxy sensation, good body, smooth texture, and a good flavor without altered flavor or an "off' taste.

### Example 2

A coffee whitener was prepared as in Example 1 but using 15 g of sodium tripolyphosphate instead of 100 g.

The product was stored during nine months at room temperature. No creaming, phase separation, gelation, sedimentation and practically no viscosity changes were found during the storage. However, the addition of this physically stable whitener to hot coffee resulted in an unacceptable visual appearance in that phase separation, emulsion destabilization, feathering, and TiO₂ sedimentation in the whitened coffee were observed.

Mouth-feel of coffee with added coffee whitener was judged by six non-trained panelists, all of which found the product having a good body and a good flavor without altered flavor or an "off" taste, but unacceptable perceptions of particulates (sandiness).

### Example 3

A coffee whitener was prepared as in Example 1 but using 1300 g of sodium tripolyphosphate instead of 100 g.

The product was stored during nine months at room temperature. No creaming, phase separation, gelation, sedimentation and practically no viscosity changes were found during the storage. However, the addition of this physically stable whitener to hot coffee resulted in an unacceptable visual appearance in that phase separation emulsion destabilization, feathering, and TiO₂ sedimentation in the whitened coffee were present.

Mouth-feel of coffee with the added coffee whitener was judged by six non-trained panelists, all of which found the product having a good body but unacceptable taste (bitterness) and also unacceptable visual perceptions (some flocculation).

### Example 4

Coffee whiteners were prepared as in Example 1, but without chelating agent (0%, as a control) and with an added chelating agent, sodium citrate, in the amounts of 0.01, 0.02, 0.03, 0.05 and 0.1 wt%, respectively. 30 g of the coffee whitener without chelating agent or with various amounts of chelating agent ranging from 0.01 to 0.1 wt% (0.05, 0.10, 0.15, 0.25 and 0.50 g of chelating agent corresponding respectively to coffee whiteners with 0.01, 0.02, 0.03, 0.05 and 0.1 wt% chelating agent) were added to 180 ml of hot coffee (see Figure 3). The results follow.

The coffee whitener with no chelating agent showed significant phase separation, i.e., a large cream layer on the top of the whitened coffee, floccules and precipitate on the bottom as shown in Figure 3. Coffee whitened using a creamer that contains 0.01 wt% of chelating agent also formed a significant cream layer and some precipitation but in a lesser amount compared to those of the control without the chelating agent. An increase in the amount of chelating agent (from 0.02 to 0.03 wt%) in the coffee whitener resulted in a significant decrease of the top cream layer and in no precipitation in the whitened coffee beverage (see Figure 3). These samples were found to be acceptable for practical applications. Further, the coffee whitener samples containing 0.5 and 0.1 wt% of chelating agent did not cause any phase separation issues, i.e., no top cream layer or precipitation were encountered when the creamer was added to coffee (Figure 3).

The embodiments and examples illustrated and discussed in this specification are intended only to teach those skilled in the art the best way known to the inventors to make and use the invention.

## Claims

1. A low protein or protein-free liquid creamer composition comprising:
emulsifying component(s);
a hydrocolloid system comprising cellulose component(s);
a chelating system comprising at least one chelating agent of an organic or inorganic acid or salt thereof;
a buffer system comprising at least one buffering agent; and
a whitening agent in an amount sufficient to provide additional whitening to an aqueous media to which the creamer is added; and
wherein the composition has a vegetable oil content of about 0.1% to about 33 % by weight of the composition and a protein content of no more than 3% by weight of the composition;
wherein the composition is in the form of an extended shelf life liquid creamer that is stable for at least six months at refrigeration temperature; or
wherein the composition is in the form of an aseptic liquid creamer that is shelf-stable for at least nine months; and
wherein the creamer provides high whitening capacity and a pleasant mouth-feel with no discernable feathering or fat separation when added to aqueous media of beverages at different pHs, hardnesses and temperatures.

2. The composition of claim 1, wherein the at least one chelating agent is present at an amount from about 0.02 to 1.4 wt%,

3. The composition of claim 1, wherein the at least one chelating agent is present at an amount from about 0.05 to 0.5 wt% and the emulsifying component(s) comprises a combination of at least two low molecular weight emulsifiers.

4. The composition of claim 2, wherein the at least one chelating agent is present at an amount from about 0.05 to 1 wt% and the hydrocolloid system comprises microcrystalline cellulose (MCC), carboxymethylcellulose (CMC), and carrageenan.

5. The composition of claim 1, wherein the at least one chelating agent is citric acid, amino acids, sodium or potassium salts of amino acids, sodium or potassium hexamethaphosphates, sodium or potassium tri-, tetra- and other polyphosphates, sodium or potassium citrate, EDTA, sodium or potassium salts of EDTA, sodium or potassium tartrate, or a combination thereof.

6. The composition of claim 1, wherein the wt/wt ratio between the hydrocolloid system and the at least one chelating agent is from about (100:1) to about (1:30).

7. The composition of claim 1, wherein the wt/wt ratio between the hydrocolloid system and the at least one chelating agent is (0.035 - 100):1 and wherein the whitening agent is titanium dioxide (TiO₂) having a particle size of about 0.1 to about 0.7 microns, and is present in an amount of about 0.1 to about 1 percent by weight of the composition.

8. The composition of claim 1, wherein the wt/wt ratio between the hydrocolloid system and the at least one chelating agent is (0.035 - 100):1 and wherein the at least one buffering agent is a food grade salt of organic or inorganic acid selected from the group consisting of potassium phosphate, dipotassium phosphate, tripotassium phosphate, sodium phosphate, disodium phosphate, trisodium phosphate, sodium tripolyphosphate, potassium tripolyphosphate, tetra sodium pyrophosphate, tetra potassium pyrophosphate, sodium hexametaphosphate, potassium carbonates, sodium carbonates, potassium bicarbonates, sodium bicarbonates, sodium or potassium acetate, sodium or potassium ascorbate, and a combination thereof.

9. The composition of claim 8, wherein the at least one buffering agent is present at an amount of about 0.05 % to about 2.1% by weight of the composition, preferably from 0.1 to 0.8 wt%, and most preferably from 0.3 to 0.6 wt%.

10. The composition of claim 1, wherein the emulsifying component(s) comprises a combination of a low HLB emulsifier and a medium HLB emulsifier with the low HLB emulsifier selected from the group consisting of monoglycerides, diglycerides, acetylated monoglycerides, sorbitan trioleate, glycerol dioleate, sorbitan tristearate, propyleneglycol monostearate, glycerol monooleate and monostearate, and a combination thereof and the medium HLB emulsifier is selected from the group consisting of sorbitan monooleate, propylene glycol monolaurate, sorbitan monostearate, calcium stearoyl-2-lactylate, glycerol sorbitan monopalmitate, soy lecithin, diacetylated tartaric acid esters of monoglycerides, and a combination thereof.

11. A beverage comprising an aqueous liquid, a beverage-forming component, and the creamer composition of claim 1 in an amount sufficient to provide a creaming effect to the beverage.

12. The beverage of claim 11 wherein the beverage-forming component is coffee, tea, chocolate or a fruit drink.

13. A dairy replacement comprising the composition of claim 1 for consumption with food or for use in cooking.

14. A method of manufacturing the creamer of claim 1, which comprises providing the emulsifying component(s), the hydrocolloid system, the chelating agent(s), the buffering agent(s), the whitening agent, and optionally a sweetener, in powder or liquid form, or a combination thereof; and dissolving the components in water under agitation.

15. The method of claim 14, which further comprises adding a vegetable oil to the water to produce a mixture of all components, followed by subjecting the mixture to an ESL or UHT heat treatment, homogenization, cooling, and filling in containers under aseptic conditions.

## Patentansprüche

1. Proteinarme oder proteinfreie flüssige Kaffeeweißer-Zusammensetzung mit:
emulgierendem Bestandteil (emulgierenden Bestandteilen);
einem Hydrokolloid-System mit Cellulosebestandteil(en);
einem chelatbildenden System mit mindestens einem Chelatbildner einer organischen oder anorganischen Säure oder dessen Salz;
einem Puffersystem mit mindestens einer Puffersubstanz; und
einem Weißmacher in ausreichender Menge, so dass er ein wässriges Milieu, dem der Kaffeeweißer zugesetzt wurde, noch weißer macht; und
wobei die Zusammensetzung einen Pflanzenölgehalt von ca. 0,1 Gew.-% bis ca. 33 Gew.-% der Zusammensetzung und einen Proteingehalt von höchstens 3 Gew.-% der Zusammensetzung aufweist;
wobei die Zusammensetzung die Form eines flüssigen Kaffeeweißers mit verlängerter Haltbarkeit (ESL) hat, der bei Kühltemperatur mindestens sechs Monate haltbar ist; oder
wobei die Zusammensetzung die Form eines aseptischen, flüssigen Kaffeeweißers hat, der mindestens neun Monate haltbar ist; und
wobei der Kaffeeweißer sehr weiß macht und ein angenehmes Mundgefühl bereitet, ohne erkennbaren Federeffekt oder Fettseparation, wenn er dem wässrigen Milieu von Getränken bei unterschiedlichen pH-Werten, Härtegraden und Temperaturen zugesetzt wird.

2. Zusammensetzung nach Anspruch 1, wobei der mindestens eine Chelatbildner in einer Menge von ca. 0,02 bis 1,4 Gew.-% vorhanden ist.

3. Zusammensetzung nach Anspruch 1, wobei der mindestens eine Chelatbildner in einer Menge von 0,05 bis 0,5 Gew.-% vorhanden ist, und der emulgierende Bestandteil (die emulgierenden Bestandteile) eine Kombination von mindestens zwei Emulgatoren mit niedrigem Molekulargewicht aufweist.

4. Zusammensetzung nach Anspruch 2, wobei der mindestens eine Chelatbildner in einer Menge von ca. 0,05 bis 1 Gew.-% vorhanden ist, und das Hydrokolloid-System mikrokristalline Cellulose (MCC), Carboxymethylcellulose (CMC) und Carrageen aufweist.

5. Zusammensetzung nach Anspruch 1, wobei es sich bei dem mindestens einen Chelatbildner um Zitronensäure, Aminosäuren, Natrium- oder Kaliumsalze von Aminosäuren, Natrium- oder Kaliumhexametaphosphat, Natrium- oder Kalium-, Tri-, Tetra- und andere Polyphosphate, Natrium- oder Kaliumcitrat, EDTA, Natrium- oder Kaliumsalze von EDT, Natrium- oder Kaliumtartrat oder eine Kombination daraus handelt.

6. Zusammensetzung nach Anspruch 1, wobei das *wt*/*wt ratio* zwischen dem Hydrokolloid-System und dem mindestens einen Chelatbildner zwischen ca. (100:1) und ca. (1:30) liegt.

7. Zusammensetzung nach Anspruch 1, wobei das *wt*/*wt ratio* zwischen dem Hydrokolloid-System und dem mindestens einen Chelatbildner (0,035 - 100):1 beträgt, und wobei es sich bei dem Weißmacher um Titandioxid (TiO₂) mit einer Partikelgröße von ca. 0,1 bis ca. 0,7 Mikron handelt, das in einer Menge von ca. 0,1 bis ca. 1 Gew.-% der Zusammensetzung vorhanden ist.

8. Zusammensetzung nach Anspruch 1, wobei das *wt*/*wt ratio* zwischen dem Hydrokolloid-System und dem mindestens einen Chelatbildner (0,035 - 100):1 beträgt, und wobei es sich bei der mindestens einen Puffersubstanz um ein Speisesalz einer organischen oder anorganischen Säure handelt, und zwar ausgewählt aus der Gruppe bestehend aus Kaliumphosphat, Dikaliumphosphat, Trikaliumphosphat, Natriumphosphat, Dinatriumphosphat, Trinatriumphosphat, Natriumtripolyphosphat, Kaliumtripolyphosp h a t , T etranatriumpyrophosphat, Tetrakaliumpyrophosphat, Natriumhexametaphosphat, Kaliumkarbonate, Natriumkarbonate, Kaliumbikarbonate, Natriumkarbonate, Natrium- oder Kaliumacetat, Natrium- oder Kaliumascorbat und eine Kombination daraus.

9. Zusammensetzung nach Anspruch 8, wobei die mindestens eine Puffersubstanz in einer Menge von ca. 0,05 bis ca. 2,1 Gew.-% der Zusammensetzung, vorzugsweise von 0,1 bis 0,8 Gew.-% und am meisten bevorzugt von 0,3 bis 0,6 Gew.-% vorhanden ist.

10. Zusammensetzung nach Anspruch 1, wobei der/die emulgierende(n) Bestandteil(e) eine Kombination aus einem Emulgator mit einem hohen HLB-Wert und einem Emulgator mit einem mittleren HLB-Wert aufweist, wobei der Emulgator mit dem niedrigen HLB-Wert aus der Gruppe ausgewählt ist, die besteht aus Monoglyceriden, Diglyceriden, acetylierten Monoglyceriden, Sorbitantrioleat, Glyceroldioleat, Sorbitantristearat, Propylenglykolmonostearat, Glycerolmonooleat und -monostearat, und einer Kombination daraus, und der Emulgator mit mittlerem HLB-Wert aus der Gruppe ausgewählt ist, die besteht aus Sorbitanmonooleat, Propylenglykolmonolaurat, Sorbitanmonostearat, Kalziumstearoyl-2-Laktylat, Glycerol-Sorbitanmonopalmitat, Sojalecithin, diacetylierte Weinsäureester aus Monoglyceriden und einer Kombination daraus.

11. Getränk, das eine wässrige Flüssigkeit, einen getränkebildenden Bestandteil und die Kaffeeweißer-Zusammensetzung nach Anspruch 1 in einer Menge aufweist, die ausreicht, um dem Getränk eine cremige Wirkung zu verleihen.

12. Getränk nach Anspruch 11, wobei es sich bei dem getränkebildenden Bestandteil um Kaffee, Tee, Schokolade oder ein Fruchtgetränk handelt.

13. Milchersatz, der die Zusammensetzung nach Anspruch 1 für den Konsum mit einem Lebensmittel oder für den Gebrauch beim Kochen aufweist.

14. Verfahren zur Herstellung des Kaffeeweißers nach Anspruch 1, das darin besteht, den/die emulgierenden Bestandteil(e), das Hydrokolloid-System, den/die Chelatbildner, die Puffersubstanz(en), den Weißmacher und wahlweise ein Süßungsmittel in Pulverform oder in flüssiger Form oder eine Kombination daraus bereitzustellen, und die Bestandteile unter Rühren in Wasser aufzulösen.

15. Verfahren nach Anspruch 14, das weiterhin darin besteht, dass dem Wasser Pflanzenöl zugesetzt wird, um eine Mischung aller Bestandteile herzustellen, die Mischung anschließend einer ESL- oder UHT-Wärmebehandlung und Homogenisierung unterzogen, abgekühlt und unter aseptischen Bedingungen in Behälter abgefüllt wird.

## Revendications

1. Composition de substitut de crème liquide à faible teneur en protéines ou sans protéines comportant:
du/des composant(s) émulsifiant(s);
un système hydrocolloïde comportant de(s) composant(s) de cellulose;
un système chélateur comportant au moins un agent chélateur d'un acide organique ou inorganique ou sel de celui-ci;
un système tampon comportant au moins un agent tampon; et
un agent blanchissant d'un montant suffisant pour fournir un blanchiment additionnel à un milieu aqueux auquel est ajouté le substitut de crème; et
la composition ayant une teneur en huile végétale d'environ 0,1 % en poids à environ 33 % en poids de la composition et une teneur en protéines de 3 % en poids maximum de la composition;
la composition ayant la forme de substitut de crème liquide de conservation longue (ESL) qui est stable pendant au moins six mois à une température de réfrigération; ou
la composition ayant la forme d'un substitut de crème liquide aseptique qui est conservable pour au moins neuf mois; et
le substitut de crème fournissant une haute capacité blanchissante et une sensation agréable en bouche, sans *feathering* discernable ou séparation du gras lorsqu'il est ajouté au milieu aqueux des boissons avec des différentes valeurs pH, duretés et températures.

2. Composition selon la revendication 1, l'au moins un agent chélateur étant présent à un montant d'environ 0,02 à 1,4 % en poids.

3. Composition selon la revendication 1, l'au moins un agent chélateur étant présent à un montant d'environ 0,05 à 0,5 % en poids, et le(s) composants émulsifiant(s) comportant une combinaison d'au moins deux émulsifiants de faible poids moléculaire.

4. Composition selon la revendication 2, l'au moins un agent chélateur étant présent à un montant d'environ 0,05 à 1 % en poids et le système hydrocolloïde comportant de la cellulose microcristalline (MCC), de la carboxyméthylcellulose (CMC) et du carraghénan.

5. Composition selon la revendication 1, l'au moins un agent chélateur étant de l'acide citrique, des acides aminés, des sels de sodium ou de potassium des acides aminés, des hexamétaphosphates de sodium ou de potassium, tri-, tetra- et autres polyphosphates de sodium ou de potassium, citrate de sodium ou de potassium, d'EDTA, des sels d'EDTA de sodium ou de potassium, du tartrate de sodium ou de potassium, ou une combinaison de ceux-ci.

6. Composition selon la revendication 1, le *wt*/*wt ratio* entre le système hydrocolloïde et l'au moins un agent chélateur étant entre environ (100:1) à environ (1:30).

7. Composition selon la revendication 1, le *wt*/*wt ratio* entre le système hydrocolloïde et l'au moins un agent chélateur étant (0,035 à 100):1 1 et l'agent blanchissant étant du dioxide de titane ((TiO₂) avec une taille des particules d'environ 0,1 à 0,7 microns présent en une quantité d'environ 0,1 à environ 1 % en poids de la composition.

8. Composition selon la revendication 1, le *wt*/*wt ratio* entre le système hydrocolloïde et l'au moins un agent chélateur étant (0,035 à 100):1 et l'au moins un agent tampon étant un sel de qualité alimentaire d'un acide organique ou inorganique choisi du groupe comportant du phosphate de potassium, du phosphate dipotassique, du phosphate tripotassique, du phosphate de sodium, du phosphate disodique, du phosphate trisodique, du tripolyphosphate de sodium, du tripolyphosphate de potassium, du pyrophosphate de tétrasodium, du pyrophosphate de tétrapotassium, du hexaméthaphosphate de sodium, des carbonates de potassium, des carbonates de sodium, des bicarbonates de potassium, des bicarbonates de sodium, d'acétate de sodium ou de potassium, d'ascorbate de sodium ou de potassium, et une combinaison de ceux-ci.

9. Composition selon la revendication 8, l'au moins un agent tampon étant présent en une quantité d'environ 0,05 % en poids à environ 2,1 % en poids de la composition, de préférence de 0,1 à 0,8 % en poids, et plus préférablement de 0,3 à 0,6 % en poids.

10. Composition selon la revendication 1, le(s) composant(s) émulsifiant(s) comportant une combinaison d'un émulsifiant à une valeur faible de HLB et d'un émulsifiant à une valeur moyenne de HLB, l'émulsifiant à HLB faible étant choisi du groupe comprenant des monoglycérides, des diglycérides, des monoglycérides acétylés, du trioléate de sorbitane, du dioléate de glycérol, du tristéarate de sorbitane, du monostéarate de propylèneglycol, du monoléate et du monostéarate de glycérol, et une combinaison de ceux-ci, et l'émulsifiant à HLB moyenne étant choisi du groupe comprenant du monoléate de sorbitane, du monolaurate de propylèneglycol, du monostéarate de sorbitane, du calcium stearoyl-2-lactylate, glycérol monopalmitate de sorbitane, de la lécithine de soja, des esters tartriques diacétylés des monoglycérides, et une combinaison de ceux-ci.

11. Boisson comportant un liquide aqueux, un composant formant boisson et la composition du substitut de crème selon la revendication 1 en une quantité suffisante pour fournir un effet de crème à la boisson.

12. Boisson selon la revendication 11, le composant formant boisson étant du café, du thé, du chocolat ou un boisson aux fruits.

13. Substitut laitier comportant la composition selon la revendication 1 pour consommation avec un aliment ou pour la cuisson.

14. Procédé pour produire le substitut de crème selon la revendication 1, qui comprend l'approvisionnement du(des) composant(s) émulsifiant(s), du système hydrocolloïde, de l'agent (des agents) chélateur(s), de l'agent (des agents) tampon(s), de l'agent blanchissant et facultativement d'un édulcorant, sous forme de poudre ou liquide, ou une combinaison de ceux-ci, et la dissolution des composants dans l'eau sous agitation.

15. Procédé selon la revendication 14, qui comprend en outre l'ajout d'une huile végétale à l'eau pour produire un mélange de tous les composants, ensuite soumettre le mélange d'un traitement thermique ESL ou UHT, d'une homogénéisation, d'un refroidissement et d'un remplissage dans des récipients dans des conditions aseptiques.
